(19) Europäisches Patentamt
European Patent Office
Office européen des brevets

(11) Veröffentlichungsnummer: **0 265 941 B1**

# (12) EUROPÄISCHE PATENTSCHRIFT

(45) Veröffentlichungstag der Patentschrift: **11.09.91**

(51) Int. Cl.5: **C02F 9/00**, C02F 1/52, C02F 11/12

(21) Anmeldenummer: **87115891.1**

(22) Anmeldetag: **29.10.87**

## (54) Verfahren zur chemisch-physikalischen Aufbereitung von Abwasser.

(30) Priorität: **30.10.86 DE 3636993**

(43) Veröffentlichungstag der Anmeldung:
**04.05.88 Patentblatt 88/18**

(45) Bekanntmachung des Hinweises auf die Patenterteilung:
**11.09.91 Patentblatt 91/37**

(84) Benannte Vertragsstaaten:
**AT CH ES IT LI NL**

(56) Entgegenhaltungen:
**EP-A- 0 062 543**
**DE-A- 3 418 074**
**US-A- 4 124 499**

**CHEMICAL ABSTRACTS, Band 102, Nr. 16, 22. April 1985, Seite 330, Zusammenfassung Nr. 137187k, Columbus, Ohio, US; S. HONDA et al.: "Treatment of wastewater from textile dyeing process. (II). Effect of allophane clays as coagulant aids", & OSAKA KOGYO GIJUTSU SHIKENSHO KIHO 1984, 35(3), 170-5**

(73) Patentinhaber: **PREUSSAG AKTIENGESELLSCHAFT**
**Karl-Wiechert-Allee 4**
**W-3000 Hannover 61(DE)**

(72) Erfinder: **Maierski, Hans Friedrich Georg, Dr.**
**Heidelbergerstrasse 29**
**W-6100 Darmstadt(DE)**
Erfinder: **Saal, Dieter, Dipl.-Ing.**
**Am Erlenberg 9**
**W-6100 Darmstadt(DE)**

(74) Vertreter: **Haar, Lucas H., Dipl.-Ing. Patentanwalt**
**Königsberger Strasse 23**
**W-6360 Friedberg/Hessen 1(DE)**

**EP 0 265 941 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur chemisch-physikalischen Aufbereitung von Abwasser, bei dem durch Fällung und/oder Flockung und Sedimentation im Abwasser gelöste und/oder suspendierte Verunreinigungen als Schlamm abgeschieden werden und der abgeschiedene Schlamm vor seiner Weiterbehandlung oder Deponierung in einer Schlammentwässerungsstufe entwässert wird.

Bei der chemisch-physikalischen Aufbereitung von Abwasser stellt die Entsorgung des abgeschiedenen und entwässerten Schlamms insbesondere dann ein großes Problem dar, wenn der Schlamm aufgrund der darin enthaltenen Schadstoffe wie Sondermüll zu behandeln ist und in eine Sondermülldeponie transportiert oder in einer Müllverbrennungsanlage verbrannt werden muß. Insbesondere das Verbrennen des Schlamms ist sehr teuer und kann zu einer starken Erhöhung der Gesamtkosten für eine Abwasseraufbereitung führen. Zur Reduzierung der Kosten ist man daher bestrebt, die bei der Wasseraufbereitung anfallende Schlammenge durch Entzug des darin enthaltenen Wassers möglichst niedrig zu halten.

Die bei den bekannten Verfahren zur chemisch-physikalischen Aufbereitung von Abwasser anfallenden Schlämme lassen sich aufgrund ihrer Konsistenz nur ungenügend entwässern. So läßt sich in der Praxis eine Entwässerung der Schlämme von mehr als 20 % im allgemeinen nur schwer erreichen (vgl. z.B. EP-A-0062543).

Der Erfindung liegt nun die Aufgabe zugrunde, bei einem Verfahren zur chemisch-physikalischen Aufbereitung von Abwasser eine Entwässerbarkeit des abgeschiedenen Schlamms zu erzielen.

Erfindungsgemäß wird diese Aufgabe dadurch gelöst, daß dem Abwasser vor der Sedimentation in ungefähr gleicher Menge Kieselgur und Aktivkohle jeweils in Pulverform zugegeben werden. Vorzugsweise ist die Zugabe der beiden Konditionierungsmittel, Kieselgur und Aktivkohle, in die einzelnen Aufbereitungsschritte integriert.

Überraschenderweise hat sich gezeigt, daß durch das Zugeben von Kieselgur und Aktivkohle zum Abwasser bei der Aufbereitung eine Konditionierung des abgeschiedenen Schlamms erreicht wird, die eine erhebliche Steigerung der Entwässerbarkeit des Schlamms bei Verwendung herkömmlicher Schlammentwässerungseinrichtungen, zum Beispiel Kammerfilterpressen ermöglicht. So konnte durch Anwendung des erfindungsgemäßen Verfahrens der Wasseranteil im entwässerten Schlamm unter 50 % gesenkt werden. Hierbei hat sich überraschenderweise gezeigt, daß durch die kombinierte Verwendung von Kieselgur und Aktivkohle ein synergistischer Effekt eintritt, so daß bereits bei der Zugabe verhältnismäßig geringer Mengen an Kieselgur und Aktivkohle ein Grad der Entwässerbarkeit des Schlammes erreicht werden kann, wie er sich bei alleiniger Verwendung von Kieselgur oder Aktivkohle nicht erzielen läßt. Außerdem werden die Schlammflocken durch die erfindungsgemäße Konditionierung so kompakt und gut sedimentierfähig, daß zur Abtrennung des Klarwassers Parallelplattenabscheider verwendet werden können. Weiterhin ist eine separate Eindickung nicht erforderlich, sondern die Absetzung des Schlammes durch Schwerkraft in einem Schlammsammelbehälter bewirkt eine ausreichende Schlammverdichtung für die anschließende Entwässerung in einer Kammerfilterpresse.

Das erfindungsgemäße Verfahren hat weiterhin den Vorteil, daß der CSB-Wert (chemischer Sauerstoffbedarf) des Abwassers gesenkt wird, da bei der Zugabe von Aktivkohle gelöste organische Wasserinhaltsstoffe adsorbiert werden.

Es wurde weiterhin gefunden, daß eine optimale Entwässerbarkeit des Schlamms erreicht werden kann, wenn dem Abwasser bei der Aufbereitung eine solche Gesamtmenge von Kieselgur und Aktivkohle zugegeben wird, daß der Anteil an Aktivkohle und Kieselgur in Feststoffgehalt des Schlamms etwa 30 % oder mehr beträgt. Das Verhältnis der zugegebenen Mengen von Kieselgur und Aktivkohle kann dabei erfindungsgemäß je nach Zusammensetzung des Abwassers zwischen 4:6 und 6:4 liegen. Das Optimum lag in der Regel bei einer Zusammensetzung von 1:1.

Um eine schnelle und gleichmäßige Verteilung von Kieselgur und Aktivkohle im Abwasser zu erreichen, ist es weiterhin zweckmäßig, wenn Kieselgur und Aktivkohle in bekannter Weise als eine wäßrige Suspension mit einem Feststoffgehalt von 2 bis 5 % zugegeben werden.

Nach dem erfindungsgemäßen Verfahren ist weiterhin vorgesehen, daß Kieselgur in derjenigen Aufbereitungsstufe dem Abwasser zugegeben wird, in der die auszuscheidenden Stoffe im Abwasser gelöst und/oder fein verteilt sind. Auf diese Weise kann sich in den auszufällenden und auszuflockenden Wasserinhaltsstoffen eine Kieselgurmatrix ausbilden, wodurch die Entwässerbarkeit des Schlamms begünstigt wird. Die Zugabe von Aktivkohle erfolgt vorzugsweise nach der Fällungsreaktion bzw. Flockenbildung, um die Fähigkeit der Aktivkohle, gelöste organische Wasserinhaltsstoffe zu adsorbieren, so weit wie möglich nutzen zu können, bevor die Aktivkohlepartikel durch Rührenergie in die im Abwasser schwebenden Flokken integriert werden. Durch die Integration der Aktivkohlepartikel in die Flocken entsteht eine Doppelmatrix aus Kieselgur und Aktivkohle, durch die die Entwässerbarkeit des Schlamms in einem Maße gesteigert wird, wie es mit einer reinen Kieselgur- oder Aktivkohlematrix nicht erreicht werden kann.

Die Zugabe eines Flockungshilfsmittels zur Verbesserung der Sedimentation erfolgt bei dem erfindungsgemäßen Verfahren vorteilhaft im Anschluß an die Zugabe von Kieselgur und Aktivkohle zur Bildung größerer, gut sedimentierfähiger Agglomerate und zur Einbindung feinster Feststoffpartikel in die Flocke.

Eine besonders gute Konditionierung und Entwässerung des Schlamms läßt sich nach einem weiteren Vorschlag der Erfindung erzielen, wenn die Korngröße der beiden in Pulverform zugegebenen Stoffe Kieselgur und Aktivkohle bei Kieselgur 90 % < 250 µm und bei Aktivkohle 90 % < 100 µm beträgt.

Die Erfindung wird nachfolgend anhand eines Ausführungsbeispiels näher erläutert, wobei auf die anliegende Zeichnung Bezug genommen wird, in der der Verfahrensablauf schematisch dargestellt ist.

Das beschriebene Ausführungsbeispiel betrifft ein Verfahren zur kontinuierlichen Aufbereitung eines polyacrylat- und zinkhaltigen Abwassers, welches bei einem industriellen Prozeß zur Herstellung polymerer Stoffe anfällt. Die wichtigsten Stationen dieser Abwasser-Aufbereitungsanlage sind in der Zeichnung erfaßt.

Das Abwasser kommt aus verschiedenen Bereichen einer Produktionsanlage und wird zunächst in einem Abwasserausgleichsbecken 1 gesammelt und gemischt. Dies ist erforderlich, weil die Zusammensetzung der täglich anfallenden Abwässer außerordentlich stark variiert. Ist das Abwasserausgleichsbecken gefüllt, so wird in Laborversuchen die Zusammensetzung des Abwassers untersucht und danach die beim Aufbereitungsverfahren zu dosierenden Chemikalienmengen für eine hinsichtlich Reinwasserqualität und Betriebskosten optimale Aufbereitung bestimmt.

Während anschließend der Inhalt des vollen Abwasserausgleichsbeckens 1 kontinuierlich in einer Durchlaufanlage aufbereitet wird, wird das in der Zwischenzeit anfallende Abwasser in einem zweiten Ausgleichsbecken gesammelt. Die Aufbereitung dieser zweiten Abwassermenge schließt sich dann an die Aufbereitung des Abwassers im Abwasserausgleichsbekken 1 an, wobei in analoger Weise vorgegangen wird.

Aus dem Abwasserausgleichsbecken 1 wird das Abwasser zunächst in eine erste, saure Aufbereitungsstufe I gepumpt. Die saure Stufe I besteht aus drei hintereinander geschalteten Aufbereitungsbehältern 2, 3, 4, die jeweils mit einem Rührwerk versehen sind. An den Behälter 4 schließt sich eine Station 5 zur Zugabe eines Flockungshilfsmittels und dann ein Parallelplattenabscheider 6 zur Sedimentation an. In dem Behälter 2 wird zunächst durch Zugabe von Salzsäure der ph-Wert dermaßen gesenkt, daß bei der Fällung der acrylhaltigen Polymere durch Zugabe von Eisen (III)-Chlorid im Behälter 3 ein ph-Wert von 2,5 bis 2,8 erzielt wird. Gleichzeitig wird im Behälter 2 Kieselgur zugegeben und durch Rühren in das hochviskose, schleimige Abwasser integriert. In der nachfolgenden Stufe, Behälter 3, wird Eisen (III)-Chlorid zugegeben, wodurch die Polymere in Form ihrer Eisenacrylate ausgefällt werden. Die in Wasser befindlichen Kieselgurpartikel sind dabei in dem ausgefällten Eisenacrylat eingebunden. Die Zugabe von Aktivkohle erfolgt in dem Behälter 4. Sie bewirkt in dem nach Ausfällung des Eisenacrylats vorhandenen Klarwassers zunächst eine Adsorption von nicht gefällten, organischen Wasserinhaltsstoffen und trägt dadurch zusätzlich zur Senkung des CSB-Wertes bei. Durch die eingetragene Rührenergie werden die Aktivkohlepartikel außerdem in das Eisenacrylat integriert, um zusammen mit den darin eingebundenen Kieselgurpartikeln die für die Entwässerung erforderliche Doppelmatrix zu bilden. Für diesen Vorgang im Behälter 4 hat sich eine Verweilzeit von etwa 8 Min. als günstig erwiesen. In der Station 5 wird unter Eintrag von Rührenergie ein Flockungshilfsmittel zugegeben. Auf diese Weise wird durch Flockenbildung die Sedimentierfähigkeit in dem nachfolgenden Parallelplattenabscheider 6 verbessert.

Der im Parallelplattenabscheider 6 abgeschiedene Acrylatschlamm wird in einem Schlammsammelbehälter 7 verdichtet und anschließend in einer Schlammpresse 8, beispielsweise einer Kammerfilterpresse entwässert. Hierbei hat sich gezeigt, daß durch die Konditionierung des Acrylatschlamms durch Zugabe von Kieselgur und Aktivkohle der Was alt des Filterkuchens auf unter 50 % gesenkt werden kann.

Die Menge der in der sauren Stufe I zu dosierenden Chemikalien schwankt bei dem beschriebenen Vorgang je nach Abwasserzusammensetzung in dem im folgenden angegebenen Grenzen:

| | | | | | |
|---|---|---|---|---|---|
| Salzsäure (32 %ige Lösung) | : | 0 | bis | 1,5 | $l/m^3$ |
| Kieselgur (5 %ige Suspension) | : | 20 | bis | 30 | $l/m^3$ |
| Eisen (III)-Chlorid (40 %ige Lösung) | : | 1 | bis | 5 | $l/m^3$ |
| Aktivkohle (4 %ige Suspensiond) | : | 33 | bis | 50 | $l/m^3$ |
| Flockungshilfsmittel (0,4 %ige Lösung) | : | 3 | bis | 4 | $l/m^3$ |

Aus dem Parallelplattenabscheider 6 der sauren Stufe I gelangt das teilweise geklärte Abwasser in eine alkalische Stufe II, die drei hintereinander geschaltete Behälter 9, 10, 11 und einen Parallelplattenabscheider 12 unfaßt. Die alkalische Stufe II stellt den zweiten Abschnitt der kontinuierlichen Abwasseraufbereitung dar und dient im wesentlichen der Entfernung von Zink. Hierzu wird in dem Behälter 9 dem Abwasser Calciumhydroxid zugegeben, wobei der ph-Wert auf den zur Fällung des Zinks als Zinkhydroxid optimalen Wert von 9,3 angehoben wird. Zusätzlich kann in den Behälter 9 noch Eisen (III)-Chlorid zugegeben werden, um die Entfernung von zinkhaltigen Trübstoffen zu erreichen. Auf diese Maßnahme kann verzichtet werden, wenn in der sauren Stufe I mit einem geringen Überschuß an Eisen (III)-Chlorid gearbeitet wurde. Kieselgur wird ebenfalls im Behälter 9 dem Abwasser zugegeben, damit die Kieselgurpartikel bei der Ausfällung von Zinkhydroxid und Eisenhydroxid in die sich bildenden Flocken eingelagert werden. Durch Rühren wird die Verteilung der Chemikalien und der Fällungsprozeß unterstützt.

In dem sich anschließenden Behälter 10 erfolgt ebenfalls unter Rühren die Zugabe von Aktivkohle, die wiederum eine zusätzlich Absenkung des CSB durch Adsorption gelöster organischer Wasserinhaltsstoffe bewirkt und zusammen mit Kieselgur den aus Zinkhydroxid und Eisenhydroxid bestehenden, ausfallenden Schlamm konditioniert, und wie zuvor in der sauren Stufe I wird auch hier eine Doppelmatrix aus Kieselgur- und Aktivkohlepartikel ausgebildet, welche die außergewöhnlich gute Entwässerbarkeit des Schlamms ermöglicht. Im Behälter 11 wird ein Flockungshilfsmittel zugegeben, welches die Sedimentation im nachfolgenden Parallelplattenabscheider 12 am Ende der alkalischen Stufe II verbessert. Der dort anfallende Schlamm wird in einem Schlammsammelbehälter 13 verdichtet und danach in der Schlammpresse 8 entwässert. Hierbei bewirkt die Konditionierung des Schlamms durch Zugabe von Kieselgur und Aktivkohle eine Reduzierung des Wassergehalts im Filterkuchen auf unter 60 %. Die Voraussetzungen für die Deponierbarkeit eines Aufbereitungsschlamms, nämlich ein Wassergehalt von unter 65 % wird damit erfüllt.

Die Menge der in der alkalischen Stufe II zu dosierenden Chemikalien schwankt je nach Abwasserzusammensetzung in den im folgenden angegebenen Grenzen:

| | | | | | |
|---|---|---|---|---|---|
| Calciumhydroxid (5 %ige Suspension) | : | 15 | bis | 20 | $1/m^3$ |
| Eisen (III)-Chlorid (40 %ige Lösung) | : | 0 | bis | 0,5 | $1/m^3$ |
| Aktivkohle (3 %ige Suspension) | : | 3 | bis | 5 | $1/m^3$ |
| Kieselgur (5 %ige Suspension) | : | 2 | bis | 3 | $1/m^3$ |
| Flockungshilfsmittel (0,4 %ige Lösung) | : | 2 | bis | 3 | $1/m^3$ |

Nach der alkalischen Stufe II gelangt das aufbereitete Abwasser in ein Rückhaltebecken 14, von wo es an eine Kläranlage abgegeben wird.

Das beschriebene Verfahren hat in erster Linie den Vorteil, daß der am Ende der sauren Stufe I und der alkalischen Stufe II anfallende Schlamm bei verhältnismäßig geringen Zugabemengen von Kieselgur und Aktivkohle außerordentlich gut entwässerbar ist, so daß die Kosten für die Entsorgung dieses sondermüllartigen Schlamms, beispielsweise durch Einlagerung in eine Sondermülldeponie oder durch Verbrennung niedrig gehalten werden.

**Patentansprüche**

1. Verfahren zur chemisch-physikalischen Aufbereitung von Abwasser, bei dem durch Fällung und/oder Flockung und Sedimentation im Abwasser gelöste und/oder suspendierte Verunreingungen als Schlamm abgeschieden werden und der abgeschiedene Schlamm vor seiner Weiterbehandlung oder Deponierung in einer Schlammentwässerungsstufe entwässert wird, dadurch gekennzeichnet, daß dem Abwasser vor der Sedimentation in etwa gleicher Menge Kieselgur und Aktivkohle jeweils in Pulverform zugegeben werden.

2. Verfahren nach Anspruch 1, dadurch gekennzeichnet, daß die Zugabe der beiden Konditionierungsmittel, Kieselgur und Aktivkohle, in die einzelnen Aufbereitungsschritte integriert sind.

3. Verfahren nach Anspruch 1, dadurch gekennzeichnet, daß dem Abwasser Kieselgur und Aktivkohle insgesamt in solcher Menge zugegeben werden, daß der Anteil an Kieselgur und Aktivkohle im Feststoffgehalt des Schlamms etwa 30 % oder mehr beträgt.

4. Verfahren nach einem vorhergehenden Anspruch, dadurch gekennzeichnet, daß das Verhältnis der zugegebenen Mengen von Kieselgur und Aktivkohle je nach Zusammensetzung des Abwassers zwischen 4:6 und 6:4 liegt.

5. Verfahren nach einem vorhergehenden Anspruch, dadurch gekennzeichnet, daß Kieselgur und Aktivkohle als wäßrige Suspension mit einem Feststoffgehalt von 2 bis 5 % zugegeben werden.

6. Verfahren nach einem vorhergehenden Anspruch, dadurch gekennzeichnet, daß die Zugabe von Kieselgur in der Aufbereitungsstufe (2,9) erfolgt, in der die auszuscheidenden Stoffe im Abwasser gelöst und/oder fein verteilt sind.

7. Verfahren nach einem vorhergehenden Anspruch, dadurch gekennzeichnet, daß die Zugabe von Aktivkohle nach der Fällungsreaktion bzw. Flockenbildung erfolgt und durch Eintrag von Rührenergie in die ausgefällten oder ausgeflockten Wasserinhaltsstoffe integriert wird.

8. Verfahren nach einem vorhergehenden Anspruch, dadurch gekennzeichnet, daß die Zugabe eines Flockungshilfsmittels im Anschluß an die Zugabe von Kieselgur und Aktivkohle erfolgt.

9. Verfahren nach einem vorhergehenden Anspruch, dadurch gekennzeichnet, daß die Korngröße der zugegebenen Stoffe Kieselgur und Aktivkohle bei Kieselgur 90 % < 250 µm und bei Aktivkohle 90 % < 100 µm beträgt.

**Claims**

1. A method for the physical-chemical treatment of wastewater, in which contaminants dissolved and/or suspended in the wastewater are separated out as sludge by precipitation and/or flocculation and sedimentation, and the separated sludge is dewatered in a sludge dewatering stage before further treatment or disposal, characterized in that, before sedimentation, approximately equal amounts of kieselguhr and activated carbon , both in powder form, are added to the wastewater.

2. A method according to Claim 1, characterized in that the addition of the two conditioning agents - kieselguhr and activated carbon - is integrated into the individual treatment steps.

3. A method according to Claim 1, characterized in that kieselguhr and activated carbon together are added to the wastewater in an amount such that the proportion of kieselguhr and activated carbon in the solids content of the sludge is approximately 30% or more.

4. A method according to any one of the preceding claims, characterized in that the ratio of the amounts of kieselguhr and activated carbon added is between 4:6 and 6:4, depending on the composition of the wastewater.

5. A method according to any one of the preceding claims, characterized in that kieselguhr and activated carbon are added as an aqueous suspension with a solids content of 2 to 5%.

6. A method according to any one of the preceding claims, characterized in that kieselguhr is added in the treatment stage (2,9) in which the substances to be separated out are dissolved and/or finely dispersed in the wastewater.

7. A method according to any one of the preceding claims, characterized in that activated carbon is added after the precipitation reaction and/or flocculation, and, by the input of stirring energy, the addition is integrated into the precipitated or flocculated substances contained in the water.

8. A method according to any one of the preceding claims, characterized in that a flocculating agent is added after kieselguhr and activated carbon have been added.

9. A method according to any one of the preceding claims, characterized in that the particle sizes of the substances added - kieselguhr and activated carbon - are 90% < 250 µm in the case of kieselguhr and 90% < 100 µm in the case of activated carbon .

**Revendications**

1. Procédé de traitement physico-chimique des eaux résiduaires, dans lequel les impuretés en solution et/ou en suspension dans les eaux résiduaires sont séparées sous forme de boue par précipitation et/ou floculation et sédimentation, tandis que la boue séparée est déshydratée pendant une opération de déshydratation de la boue avant son traitement ultérieur ou sa mise en décharge, caractérisé en ce qu'on ajoute aux eaux résiduaires, avant la sédimentation, des quantités approximativement égales de kieselgur et de charbon actif, tous deux sous forme pulvérulente.

2. Procédé selon la revendication 1, caractérisé en ce que l'addition des deux agents de traitement, qui sont le kieselgur et le charbon actif, est intégrée aux différentes étapes du traitement.

3. Procédé selon la revendication 1, caractérisé en ce qu'on ajoute aux eaux résiduaires du kieselgur et du charbon actif en quantités telles que la teneur en kieselgur et en charbon actif dans la matière sèche de la boue est égale à environ 30% ou davantage.

4. Procédé selon l'une des revendications précédentes, caractérisé en ce que le rapport des quantités de kieselgur et de charbon actif est compris entre 4:6 et 6:4, suivant la composition des eaux résiduaires.

5. Procédé selon l'une des revendications précédentes, caractérisé en ce que le kieselgur et le charbon actif sont ajoutés sous forme de suspension aqueuse ayant une teneur en matières solides de 2 à 5%.

6. Procédé selon l'une des revendications précédentes, caractérisé en ce que l'addition de kieselgur a lieu pendant l'étape de traitement (2, 9) pendant laquelle les substances à séparer se trouvent dissoutes et/ou finement réparties dans les eaux résiduaires.

7. Procédé selon l'une des revendications précédentes, caractérisé en ce que l'addition de charbon actif a lieu après la réaction de précipitation ou de floculation et est intégrée aux substances contenues dans l'eau et précipitées ou floculées par addition d'énergie d'agitation.

8. Procédé selon l'une des revendications précédentes, caractérisé en ce que l'addition d'un floculant a lieu à la suite de l'addition du kieselgur et du charbon actif.

9. Procédé selon l'une des revendications précédentes, caractérisé en ce que la granulométrie des substances ajoutées, qui sont le kieselgur et le charbon actif, est respectivement pour le kieselgur, 90% $<250\mu m$ et, pour le charbon actif, 90% $< 100\ \mu m$.

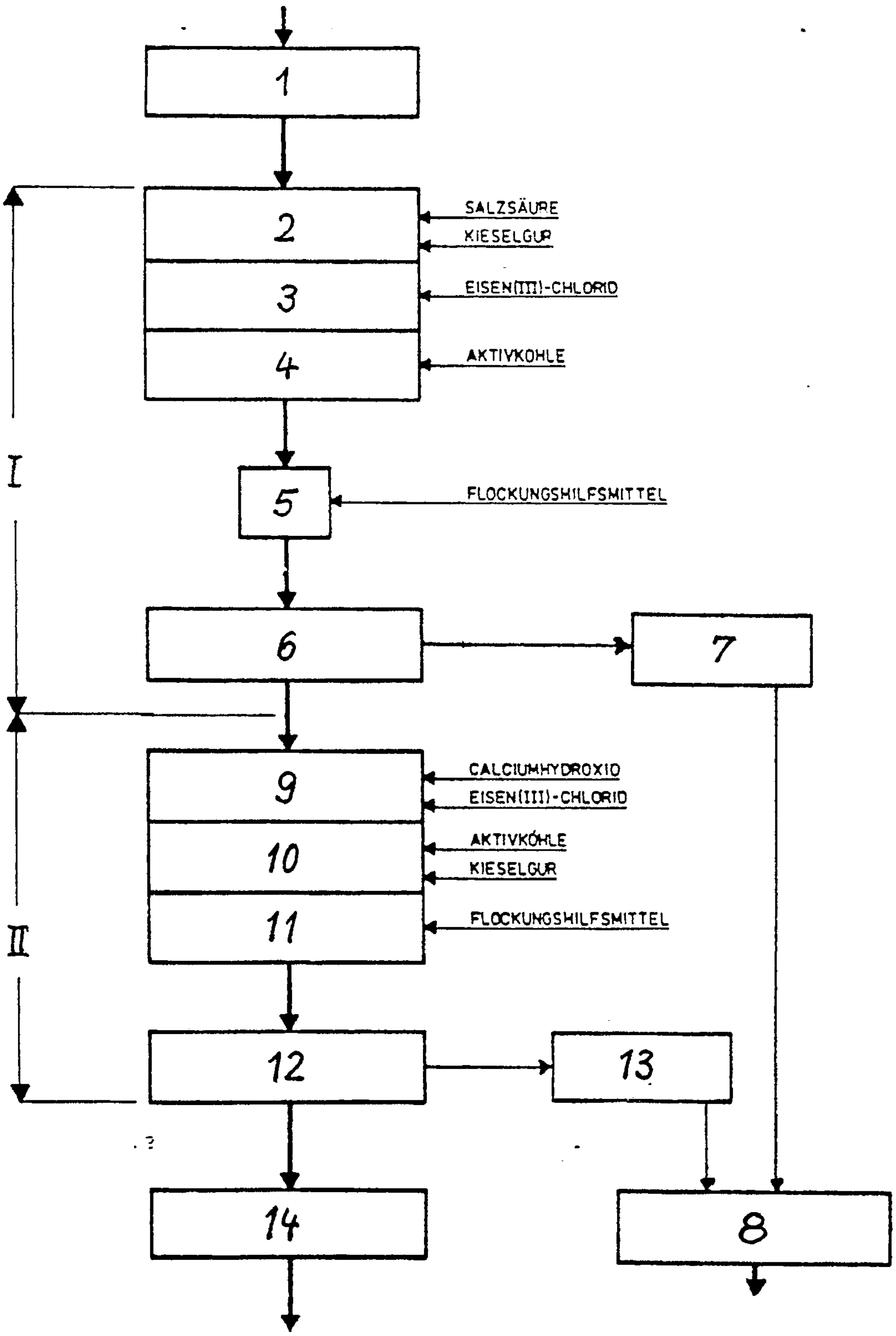
1
2
3
4
5
6
7
9
10
11
12
13
14
8
I
II
SALZSÄURE
KIESELGUR
EISEN(III)-CHLORID
AKTIVKOHLE
FLOCKUNGSHILFSMITTEL
CALCIUMHYDROXID
EISEN(III)-CHLORID
AKTIVKOHLE
KIESELGUR
FLOCKUNGSHILFSMITTEL